# FASCICULE DE BREVET EUROPEEN

(11) **EP 3 400 842 B1**
(45) Date de publication et mention de la délivrance du brevet: **29.04.2020**
(21) Numéro de dépôt: 18171868.5
(22) Date de dépôt: 11.05.2018
(51) Int. Cl.: A47C 23/04, A47C 27/06, A47C 7/35, A47C 23/00, A47C 23/06, A47C 23/043

(54) **DISPOSITIF DE REGLAGE DE RAIDEUR**
EINRICHTUNG ZUR EINSTELLUNG DER STEIFIGKEIT
DEVICE FOR ADJUSTING THE STIFFNESS

(30) Priorité: 12.05.2017 FR 1754174
(43) Date de publication de la demande: 14.11.2018
(73) Titulaire: Tournadre SA Standard Gum, 18000 Bourges (FR)
(72) Inventeur: CAILLEY, Géraud, 18000 Bourges (FR); LOBRY, Pascal, 18000 Bourges (FR); LOBRY, Jacques, 18000 Bourges (FR)
(74) Mandataire: Cabinet Beau de Loménie

(56) Documents cités:
- EP-A2- 1 155 643
- WO-A1-96/27312
- DE-U1-202005 006 399
- US-A- 2 842 784
- US-A- 2 985 895
- US-A- 3 608 107
- US-A- 4 667 357

## Description

### Arrière-plan de l'invention

La présente divulgation concerne le domaine de l'ameublement et plus particulièrement un dispositif et un procédé de réglage de raideur.

Afin de rendre une surface d'assise, de dossier ou de couchage adaptable aux préférences et à l'anatomie de différents utilisateurs, des ensembles de literie, tels que des matelas et sommiers, réglables en raideur ont été précédemment divulgués, par exemple dans EP 1 386 564 A1, EP 1 155 643 A2, WO 2008/015235, WO 96/27312, US 4,667,357 ou DE 10 2008 050 108 A1. Typiquement, pour le réglage de la raideur, ces ensembles de literie comprennent au moins un dispositif déplaçable entre au moins une première position et une deuxième position commandant des raideurs différentes.

Toutefois, un problème pouvant être rencontré par des tels dispositifs de réglage de raideur est celui de leur déplacement involontaire et intempestif pouvant provoquer un changement inattendu de la raideur. Pour empêcher un tel déplacement involontaire du dispositif de réglage, on a proposé par exemple un dispositif d'encliquetage dans la publication de demande de brevet européen EP 1 386 564 A1, ou des encoches d'arrêt dans le brevet US 4,667,357. Néanmoins, ces arrangements compliquent la fabrication et l'actionnement des dispositifs de réglage de raideur.

### Objet et résumé de l'invention

La présente divulgation vise à remédier à ces inconvénients, en proposant un dispositif de réglage de raideur apte à maintenir une raideur sélectionnée pour un ressort d'assise, de dossier ou de literie avec des moyens simples à mettre en œuvre et faciles à opérer.

Suivant au moins un exemple, le dispositif de réglage de raideur, qui peut être déplaçable entre une position d'interférence pour imposer une restriction sur la déformation d'un ressort de literie et une position de non-interférence pour libérer le ressort de la restriction, en traversant une position intermédiaire entre les positions d'interférence et non-interférence, peut alors comprendre un élément élastique soumis à une flexion élastique plus grande dans la position intermédiaire que dans les positions d'interférence et non-interférence.

Grâce à ces dispositions, l'élément élastique opposera une résistance élastique au déplacement du dispositif entre les positions d'interférence et non-interférence, de manière à maintenir l'élément de commande de manière stable dans chacune de ces positions, sans pour autant empêcher l'actionnement volontaire du dispositif pour modifier la raideur de la literie. Le dispositif de réglage de raideur peut ainsi être bistable.

En particulier, l'élément élastique peut être une lame élastique. Le dispositif peut ainsi être réalisé de manière particulièrement simple. Par ailleurs, cette lame élastique, sans contrainte, peut être cambrée. Ainsi, la flexion élastique dans la position intermédiaire peut être contraire à la cambrure de la lame élastique sans contrainte, et la détente de la lame élastique vers sa configuration naturellement cambrée fournir une force de retour vers les positions d'interférence et de non-interférence de chaque côté de la position intermédiaire.

Afin de restreindre l'encombrement du dispositif de réglage de raideur, celui-ci peut notamment comprendre une pièce rotative apte à tourner entre les positions d'interférence et non-interférence. Cette pièce rotative peut notamment être apte à tourner autour d'un axe de compression du ressort entre les positions d'interférence et non-interférence. Ainsi, le dispositif de réglage peut être intégré au ressort sans nécessairement en élargir l'empreinte dans un plan de soutien perpendiculaire à son axe de compression. Pour faciliter sa production, en particulier si elle est produite en matériau polymère organique, notamment thermoplastique, la pièce rotative peut être moulée, notamment par injection. Toutefois, d'autres matériaux, par exemple métalliques, et/ou d'autres procédés de production, comme par exemple la fabrication additive, peuvent être utilisés alternativement ou en complément aux polymères organiques et au moulage, respectivement.

Afin de permettre le réglage simultané d'une pluralité de ressorts, le dispositif de réglage de raideur peut comprendre non pas un seul élément rotatif, mais une pluralité de pièces rotatives aptes à tourner entre les positions d'interférence et non-interférence. Chaque pièce rotative peut être configurée pour imposer une restriction sur la déformation d'un ressort respectif dans la position d'interférence, et libérer le ressort respectif de la restriction dans la position de non-interférence.

Le dispositif de réglage de raideur peut comprendre un organe de commande déplaçable entre les positions d'interférence et non-interférence. Cet organe de commande peut inclure une pluralité d'éléments élastiques soumis à une flexion élastique plus grande dans la position intermédiaire que dans les positions d'interférence et non-interférence. Chaque élément élastique peut être relié à une pièce rotative respective, parmi la pluralité de pièces rotatives, par un pivot correspondant. Cet organe de commande peut notamment être déplaçable en ligne droite entre les positions d'interférence et non-interférence, pour permettre son positionnement entre des rangées de ressorts de literie avec des pièces rotatives respectives pour le réglage de leur raideur. Pour faciliter sa production, en particulier s'il est produit en matériau polymère organique, notamment thermoplastique, l'organe de commande peut être moulé, notamment par injection, comme les éléments rotatifs. Toutefois, d'autres matériaux, par exemple métalliques, et/ou d'autres procédés de production, comme par exemple la fabrication additive, peuvent être utilisés alternativement ou en complément aux polymères organiques et au moulage, respectivement.

Alternativement ou en complément à l'organe de commande, chaque pièce rotative de la pluralité de pièces rotatives comprend au moins un élément élastique soumis à une contrainte élastique plus grande dans la position intermédiaire que dans les positions d'interférence et non-interférence et relié par un pivot à une pièce rotative adjacente parmi la pluralité de pièces rotatives. Le mouvement entre les positions d'interférence et non-interférence peut ainsi être transmis entre pièces rotatives adjacentes pour assurer le réglage simultané de la raideur de l'ensemble des ressorts.

Alternativement ou en complément à l'intégration de l'élément élastique dans un organe de commande ou une pièce rotative, l'élément élastique peut être le ressort lui-même, qui pourrait ainsi être soumis à une flexion élastique, par exemple perpendiculairement à son axe de compression, plus grande dans la position intermédiaire du dispositif de réglage de raideur que dans ses positions d'interférence et non-interférence, de manière à assurer le retour du dispositif de réglage de raideur vers la position d'interférence ou la position de non-interférence de chaque côté de la position intermédiaire.

La présente divulgation concerne aussi un ensemble, telle que par exemple un matelas ou un sommier, pouvant comprendre un ressort d'assise, de dossier ou de literie et le dispositif de réglage susmentionné pour régler la raideur du ressort par déplacement entre les positions d'interférence et non-interférence. Pour faciliter sa production, en particulier s'il est produit en matériau polymère organique, notamment thermoplastique, le ressort peut aussi être moulé, notamment par injection. Toutefois, d'autres matériaux, par exemple métalliques, et/ou d'autres procédés de production, comme par exemple la fabrication additive, peuvent être utilisés alternativement ou en complément aux polymères organiques et au moulage, respectivement.

La présente divulgation concerne aussi un procédé de réglage de raideur avec un dispositif de réglage de raideur. Ce procédé de réglage de raideur peut comprendre au moins une étape dans laquelle le dispositif de réglage de raideur soit déplacé entre une position d'interférence imposant une restriction sur la déformation d'un ressort d'assise, de dossier ou de literie et une position de non-interférence libérant le ressort de la restriction. Dans ce déplacement, le dispositif de réglage de raideur peut traverser une position intermédiaire dans laquelle un élément élastique du dispositif de réglage de raideur est soumis à une flexion élastique plus grande que dans les positions d'interférence et non-interférence.

### Brève description des dessins

L'invention sera bien comprise et ses avantages apparaîtront mieux, à la lecture de la description détaillée qui suit, de modes de réalisation représenté à titre d'exemples non limitatifs. La description se réfère aux dessins annexés sur lesquels :
- la figure 1A est une vue en perspective du ressort à raideur réglable, détendu, avec son dispositif de réglage en position de plus grande raideur ;
- la figure 1B est une vue de côté du ressort de la figure 1A ;
- la figure 1C est une vue en coupe du ressort de la figure 1B suivant le plan IC-IC ;
- la figure 1D est une vue en coupe de l'élément souple de la figure 1C suivant le même plan, mais avec son dispositif de réglage en position de moindre raideur ;
- la figure 2A est une vue de côté du ressort de la figure 1A, détendu, sans son dispositif de réglage ;
- la figure 2B est une vue de côté du ressort de la figure 1A, comprimé, sans son dispositif de réglage ;
- la figure 3A est une vue en perspective d'un ensemble comprenant une pluralité de ressorts analogues à celui de la figure 1A, en position de plus grande raideur ;
- la figure 3B est une vue en coupe de l'ensemble de la figure 3A suivant le plan IIIB-IIIB ;
- la figure 3C est un détail de la figure 3B ;
- la figure 4A est une vue en perspective de l'ensemble de la figure 3A, en position de moindre raideur ;
- la figure 4B est une vue en coupe de l'ensemble de la figure 4A suivant le plan IVB-IVB ;
- la figure 4C est un détail de la figure 4B ;
- la figure 5A est une vue en perspective de l'ensemble de la figure 3A, en position intermédiaire ;
- la figure 5B est une vue en coupe de l'ensemble de la figure 5A suivant le plan VB-VB ;
- la figure 5C est un détail de la figure 5B ;
- la figure 6A est une vue en perspective d'un ensemble alternatif comprenant aussi une pluralité de ressorts à raideur réglable, en position de plus grande raideur ;
- la figure 6B est une vue en perspective de l'ensemble de la figure 5A, écorchée dans le plan VB-VB ; et
- la figure 6C est une vue en perspective d'un ensemble de la figure 5A, écorchée dans le plan VB-VB, en position de moindre raideur.

### Description détaillée de l'invention

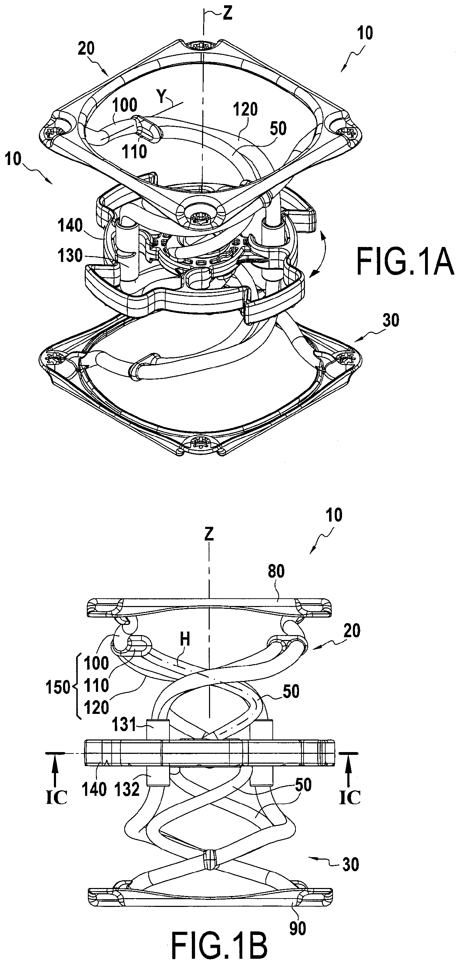

Un ressort 10 d'assise, de dossier ou de literie dont la raideur suivant un axe de compression Z est réglable est illustré sur les figures 1A à 1C. Comme dans l'exemple illustré, ce ressort 10 peut être comprendre plusieurs pièces élastiques arrangées en série suivant l'axe de compression Z. En particulier, il peut comprendre une première pièce élastique 20 et une deuxième pièce élastique 30 arrangées mécaniquement en série suivant l'axe de compression Z et connectées l'une à l'autre par une connexion 40 qui peut être situé, comme dans l'exemple illustré, au centre du ressort10.

Chacune des deux pièces élastiques 20, 30 peut comprendre au moins deux éléments hélicoïdaux 50 arrangés mécaniquement en parallèle comme dans l'exemple illustré. En particulier, ces éléments hélicoïdaux 50 peuvent être formés, comme dans l'exemple illustré sur la figure 1A, par des tiges enroulées suivant des hélices H coaxiales autour de l'axe de compression Z. Par ailleurs, dans chacune des pièces élastiques 20, 30, le décalage angulaire autour de l'axe de compression X entre les hélices H coaxiales des éléments hélicoïdaux 50 peut être régulier. Ainsi, dans l'exemple illustré, le décalage angulaire entre les éléments hélicoïdaux 50 de chaque pièce élastique 20, 30 peut être de 360°/x, où x est le nombre d'éléments hélicoïdaux 50 en parallèle dans chaque pièce élastique 20, 30. Ainsi, pour un nombre x d'éléments hélicoïdaux 50 de, par exemple, deux, le décalage angulaire peut être de 180°.

Dans l'exemple illustré, chaque pièce élastique 20, 30 peut comprendre, en outre, un connecteur 60, 70 complémentaire, respectivement, du connecteur 70, 60 de l'autre pièce élastique 30, 20 pour former la connexion 40, ainsi qu'une plateforme de support 80, 90. Les connecteurs 60, 70 et les plateformes de support 80, 90 peuvent être disposés sur des extrémités opposées des pièces élastiques 20, 30 respectives. Ainsi, quand les pièces élastiques 20, 30 sont assemblées en série, en reliant leurs connecteurs 60, 70 respectifs, pour former le ressort 10, comme dans l'exemple illustré, ce ressort 10 peut s'étendre de l'une à l'autre des plateformes de support 80, 90, suivant l'axe de compression Z.

Dans chaque pièce élastique 20, 30 de l'exemple illustré, une extrémité de chaque élément hélicoïdal 50 peut être reliée directement au connecteur 60, 70 respectif, tandis que l'autre extrémité peut être reliée à la plateforme de support 80, 90 à travers une articulation élastique 100. Chacune de ces articulations élastiques 100 peut notamment présenter un axe de torsion Y sensiblement orthogonal à l'axe de compression Z et être reliée à l'élément hélicoïdal 50 respectif par un bras 110 plus rigide, orienté suivant une direction radiale sensiblement orthogonale à l'axe de compression Z et à l'axe de torsion Y respectif, de manière à ce que l'articulation élastique 100 soit reliée en porte-à-faux à l'élément hélicoïdal 50 en direction orthogonale à l'axe de compression Z. Comme dans l'exemple illustré, chaque articulation élastique 100 peut prendre la forme d'une tige de torsion reliant le bras 110 à la plateforme de support 80, 90. Toutefois, d'autres formes sont également envisageables.

En outre, chaque pièce élastique 20, 30 de l'exemple illustré peut aussi comprendre d'autres tiges 120 solidaires des bras 110. Plus spécifiquement, chaque tige 120 peut s'étendre d'une première extrémité 121 solidaire d'un bras 110 respectif à une seconde extrémité 122. Chaque seconde extrémité 122 peut être décalée par rapport à l'axe de torsion Y de l'articulation élastique 100 correspondant au bras 110 respectif dans un plan orthogonal à cet axe de torsion Y, de manière à tourner autour de l'axe de torsion Y avec le bras 110 respectif. En particulier, entre ces premières et secondes extrémités 121, 122, chaque tige 120 peut être incurvée, et notamment suivre une hélice plus large que celles des éléments hélicoïdaux 50, de manière à les contourner pour que la première et la seconde extrémité 121, 122 de chaque tige 120 soient situés de côtés diamétralement opposés des éléments hélicoïdaux 50, tout en étant aussi mutuellement décalés en direction parallèle à l'axe de compression Z. Les tiges 120 sont par ailleurs élastiquement flexibles.

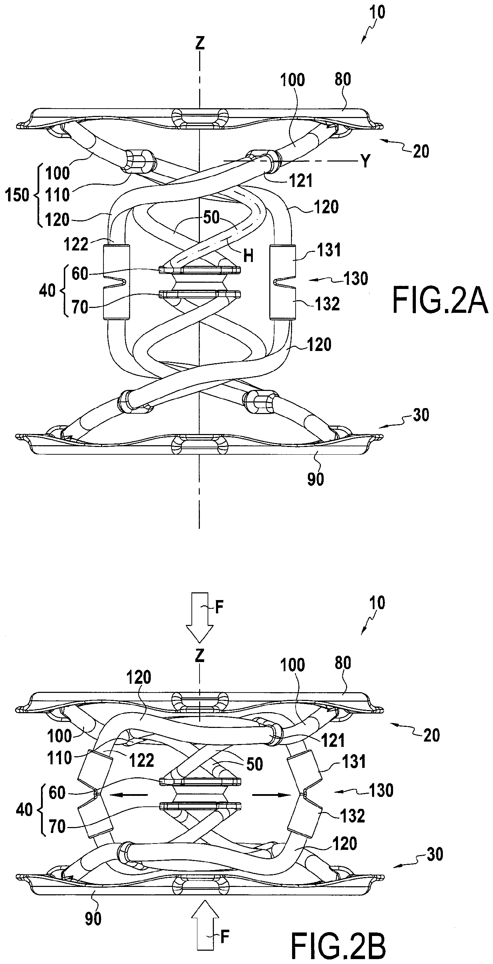

Ainsi, chaque articulation élastique 100 forme, avec le bras 110 et tige 120 correspondants, un mécanisme 150 configuré pour que la compression de l'élément hélicoïdal 50 respectif dans l'axe de compression Z actionne un mouvement de la seconde extrémité de la tige 120 en direction radiale par rapport à l'axe de compression Z, comme illustré sur la figure 2B.

Comme dans l'exemple illustré, la seconde extrémité 122 de chaque tige 120 de l'une des pièces élastiques 20, 30 peut être reliée par une articulation à la seconde extrémité 122 d'une tige 120 opposée sur l'autre des pièces élastiques 30, 20. Plus spécifiquement, les secondes extrémités 122 correspondantes de chaque paire de tiges 120 opposées peuvent être reçues dans des embouts opposés 131,132 d'un manchon flexible 130 qui peut former ainsi une telle articulation. Les manchons flexibles 130 peuvent notamment être fendus perpendiculairement à leur axe principal, de manière à augmenter leur flexibilité.

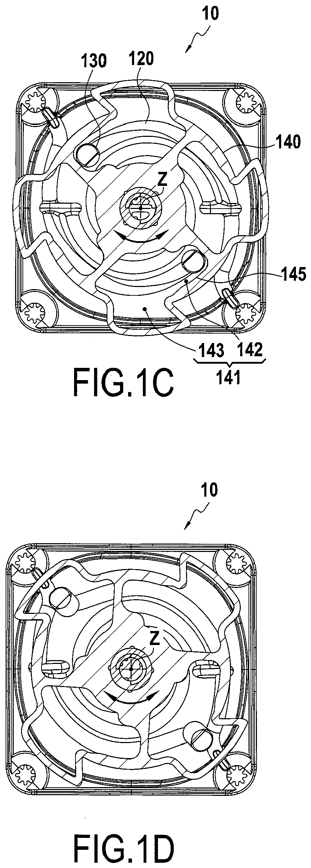

Un dispositif de réglage peut permettre le réglage de la raideur du ressort 10 dans l'axe de compression Z. Ce dispositif de réglage peut notamment comprendre une pièce rotative 140 pour chaque ressort 10. Cette pièce rotative 140 peut être retenue par les connecteurs 60, 70 de manière à être rotative autour de l'axe de compression Z. Comme on peut notamment voir sur la figure 1C, la pièce rotative 140 peut comprendre plusieurs ouvertures 141 traversées par les manchons flexibles 130 en direction parallèle à l'axe de compression Z. Chaque ouverture 141 peut s'étendre sur un arc de cercle respectif autour de l'axe de compression Z. Plus particulièrement, le long de cet arc de cercle respectif, chaque ouverture 141 peut comprendre une première section 142 et une seconde section 143, la première section 142 pouvant être plus étroite que la deuxième section 143 en direction radiale par rapport à l'axe de compression Z. Plus spécifiquement, le bord extérieur 144 de chaque ouverture 141 peut être plus proche de l'axe de compression Z dans la première section 142 que dans la seconde section 143, et former ainsi une butée 145 radiale pour restreindre un déplacement radial du manchon flexible 130 respectif, et donc aussi des secondes extrémités 122 de tiges 120 emmanchées dans ce manchon flexible 130, par rapport à l'axe de compression Z. La pièce rotative 140 peut ainsi tourner entre une position d'interférence, dans laquelle les manchons flexibles 130 sont reçus dans les premières sections 142 des ouvertures 141 et les butées 145 restreignent l'écartement radial des manchons flexibles 130, et donc des secondes extrémités 122 des tiges 120 par rapport à l'axe de compression Z, comme illustré sur les figures 1A à 1C, et une position de non-interférence dans laquelle les manchons flexibles 130 sont reçus dans les secondes sections 143, plus larges, des ouvertures 141, comme illustré sur la figure 1D, libérant ainsi les manchons flexibles 130 est les secondes extrémités 122 des tiges 120 pour leur permettre un plus grand écartement radial par rapport à l'axe de compression Z, tel que celui illustré sur la figure 2B.

Les pièces élastiques 20, 30, la pièce rotative 140 et les manchons flexibles 130 peuvent être en matériau polymère organique, notamment thermoplastique tel que, par exemple une polyamide, un polyoxyméthylène, ou un copolyester. Toutefois, d'autres matériaux, par exemple métalliques, peuvent être utilisés alternativement ou en combinaison avec de tels matériaux polymères. Les pièces élastiques 20, 30 et la pièce rotative 140 peuvent notamment être moulées, en particulier par injection. Les manchons flexibles 130 peuvent notamment être coupés à partir d'une pièce extrudée. Toutefois, d'autres matériaux par exemple métalliques, et des procédés de production alternatifs, comme par exemple la fabrication additive, peuvent être utilisés alternativement ou en complément aux polymères organiques et au moulage ou extrusion, respectivement.

Le fonctionnement du ressort 10 de l'exemple illustré peut aussi être décrit en se référant aux figures 1A à 2B. Quand la pièce rotative 140 du dispositif de réglage 400 est dans sa position de non-interférence, avec les manchons flexibles 130 reçus dans les secondes sections 143, plus larges, des ouvertures 141, et que le ressort de literie 10 est soumis à un effort de compression F suivant l'axe de compression Z, entre les plateformes de support 80, 90, les éléments hélicoïdaux 50 vont être comprimés et les bras 110 les reliant aux articulations élastiques 100 tourner autour de l'axe de torsion Y, avec les tiges 120. Par cette rotation des tiges 120 autour de l'axe de torsion Y, les secondes extrémités 122 des tiges 120 peuvent s'écarter radialement de l'axe de compression Z, sans opposition sur la largeur des secondes sections 143 des ouvertures 141 de la pièce rotative 140, comme illustré sur la figure 2B. Le ressort 10 reste ainsi relativement souple en compression.

Si la pièce rotative 140 est toutefois tournée, autour de l'axe de compression Z, vers sa position d'interférence, de telle manière que les manchons flexibles 130 soient reçus dans les premières sections 142, plus étroites, des ouvertures 141, les butées 145 peuvent restreindre l'écartement radial, par rapport à l'axe de compression Z, des manchons flexibles 130 et donc des secondes extrémités 122 des tiges 120, restreignant ainsi la rotation des tiges 120 autour des axes de torsion Y des articulations élastiques 100 respectives quand le ressort 10 est soumis à une compression F suivant l'axe de compression Z. Même si les tiges 120 peuvent être élastiquement flexibles, afin de permettre leur retour vers la position détendue de départ lorsque la compression F cesse, leur restriction par les butées 145 va indirectement restreindre aussi la rotation des bras 110 autour de l'axe de torsion Y, raidissant ainsi les articulations élastiques 100, voire même les éléments hélicoïdaux 50, puisque la torsion autour de leurs hélices H respectives peut aussi être indirectement restreinte ainsi. De cette manière, les ressorts 10 peuvent avoir une raideur dans l'axe de compression Z sensiblement supérieure quand la pièce rotative 140 est dans sa position d'interférence que quand la pièce rotative 140 est dans sa position de non-interférence.

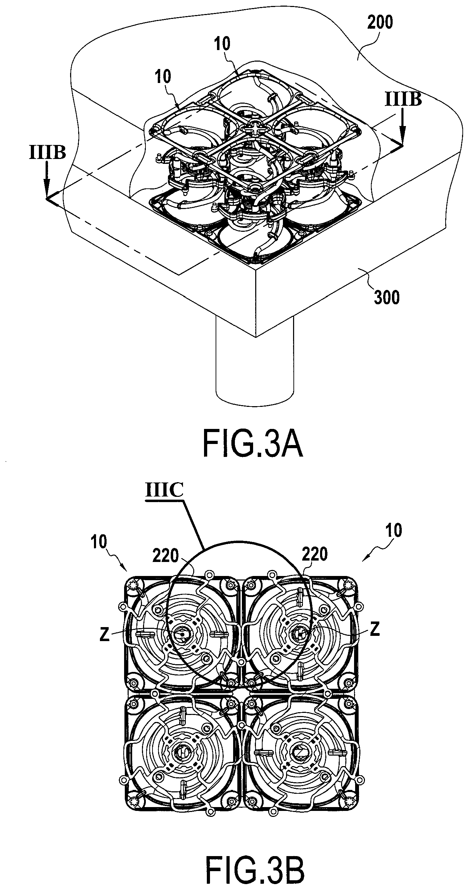

Pour former un ensemble telle qu'un matelas ou un sommier, il est possible de grouper plusieurs ressorts tels que ceux ci-décrits. Ainsi, les figures 3A, 3B, 4A, 4B, 5A et 5B illustrent l'âme d'un matelas 200 sur un lit 300. L'âme du matelas 200 peut comprendre une pluralité de ressorts 10, arrangés comme dans l'exemple illustré en plusieurs files et colonnes, dans un plan perpendiculaire aux axes de compression Z. Les plateformes de support 80, 90 de ressorts 10 adjacents peuvent être reliés par des liaisons flexibles 210.

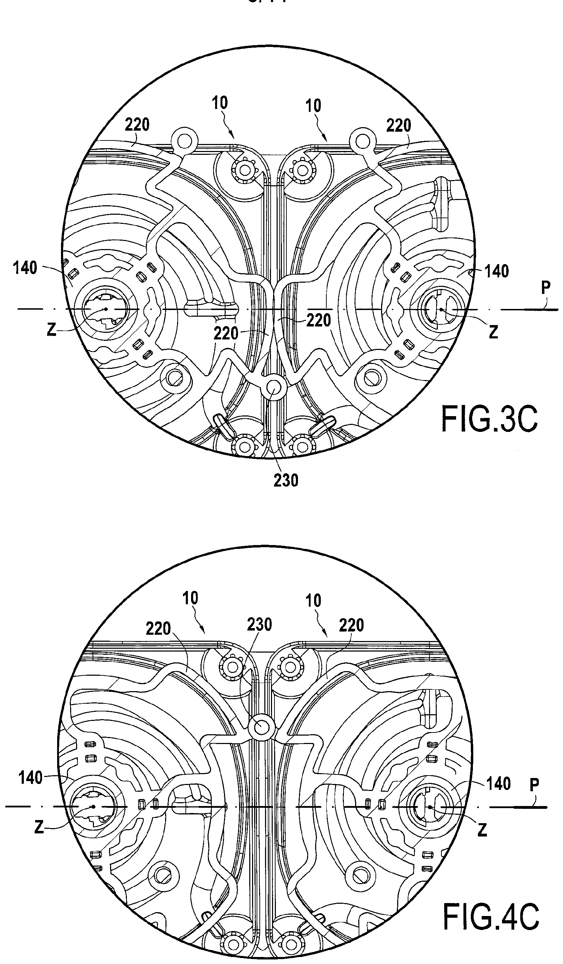

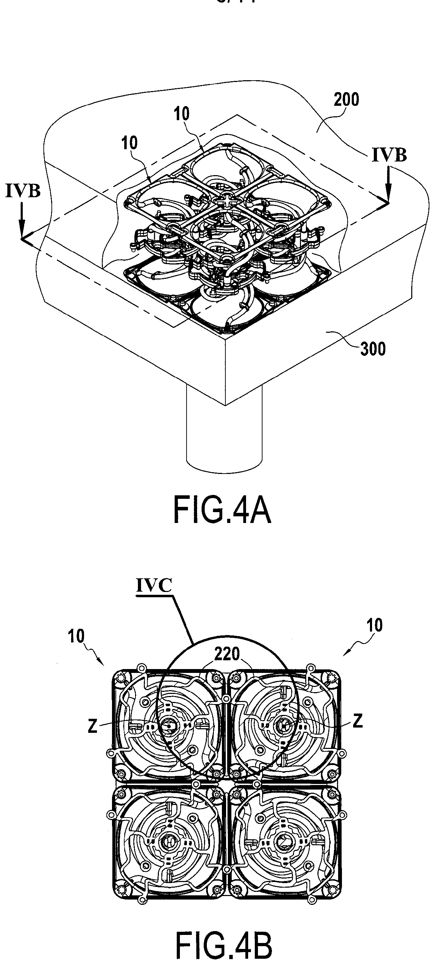

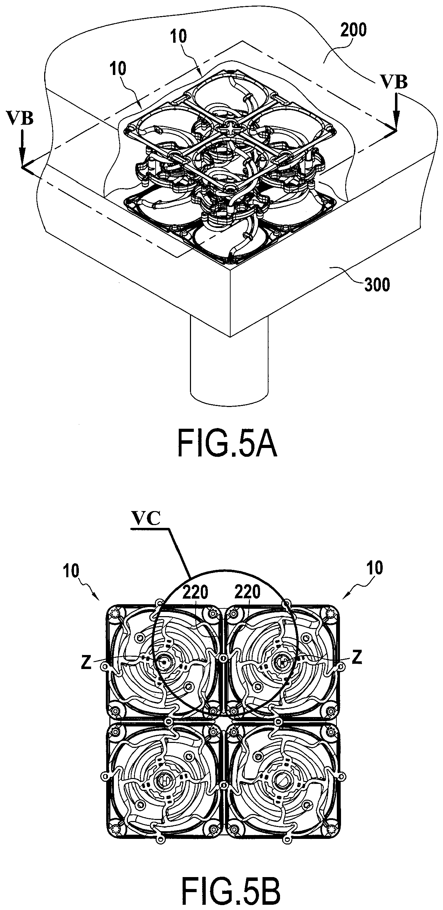

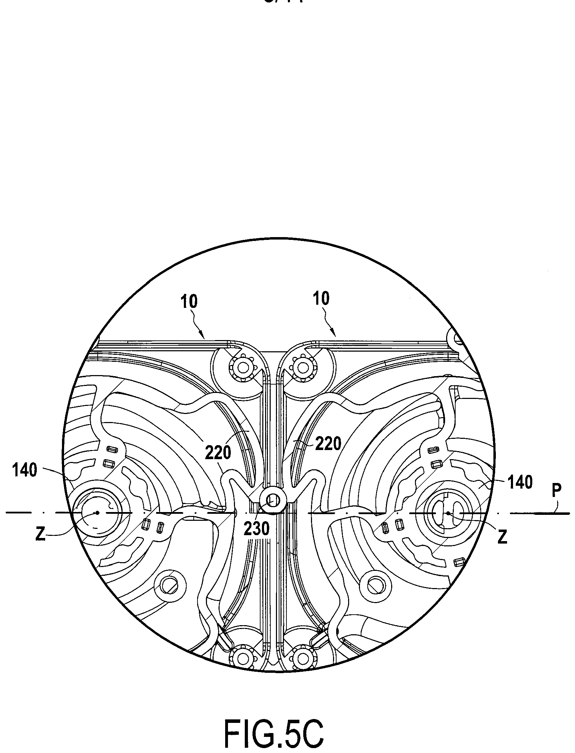

Afin de permettre l'actionnement simultané du déplacement des pièces rotatives 140 associées à l'ensemble de ressorts 10 entre les positions d'interférence et non-interférence, le dispositif de réglage peut coupler mécaniquement ces pièces rotatives 140. Plus spécifiquement, comme illustré en détail sur les figures 3C, 4C, et 5C le dispositif de réglage peut par exemple comprendre au moins un élément élastique, qui peut être formé par une lame flexible 220 intégrée en périphérie de chaque pièce rotative 140, orientée dans un plan perpendiculaire à l'axe de compression Z, et cambrée radialement vers l'extérieur par rapport à l'axe de compression Z, ainsi que des pivots 230. Chaque pivot 230 peut présenter un axe de pivotement parallèle aux axes de compression Z des ressorts 10, et coupler mécaniquement deux lames flexibles 220 situées sur des pièces rotatives 140 associées à une paire de ressorts 10 adjacents. La distance entre chaque pivot 230 et les axes de compression Z de chacun des deux ressorts 10 adjacents peut être supérieure à la moitié de la distance entre les axes de compression Z des deux ressorts 10 adjacents, de telle manière que, dans la position d'interférence, le pivot 230 soit d'un côté d'un plan P plat reliant les axes de compression Z des deux éléments 10 adjacents, comme illustré sur la figure 3C, dans la position de non-interférence le pivot 230 soit de l'autre côté du plan P, comme illustré sur la figure 4C et que, pour déplacer les pièces rotatives 140 des éléments de literie 10 adjacents entre la position d'interférence et la position de non-interférence, le pivot 230 doive traverser une position intermédiaire, dans le plan P, dans laquelle les lames flexibles 220 soient fléchies élastiquement, contre leurs cambrures respectives, vers les axes de compression Z de leurs ressorts 10 respectifs, comme illustré sur la figure 5C.

Ainsi, la flexion des lames flexibles 220 permet de fournir des forces de retour vers les positions d'interférence et non-interférence du dispositif de réglage de raideur de chaque côté de la position intermédiaire, pour maintenir les positions d'interférence et non-interférence de manière stable et éviter le passage involontaire de l'une à l'autre, et donc un changement involontaire de la raideur des ressorts 10. L'utilisateur pourra faire un effort conscient, pour fléchir les lames flexibles 220, afin de traverser la position intermédiaire et déplacer ce dispositif bistable entre ses positions stables d'interférence et de non-interférence.

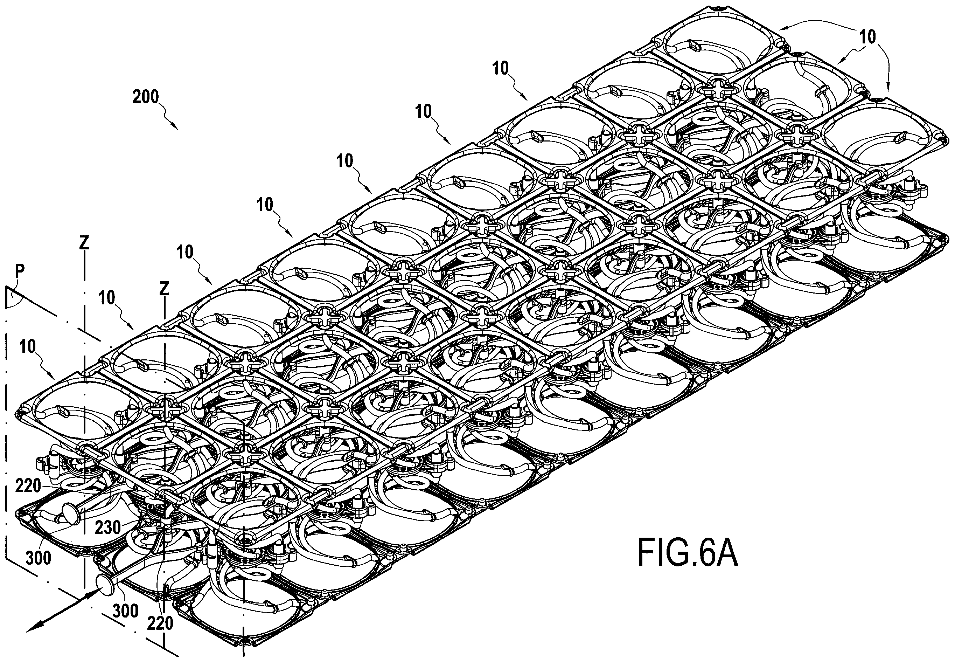

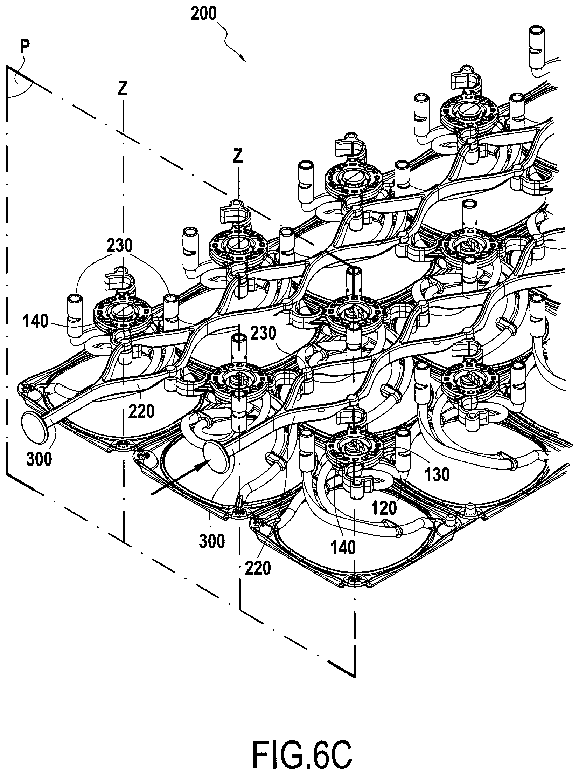

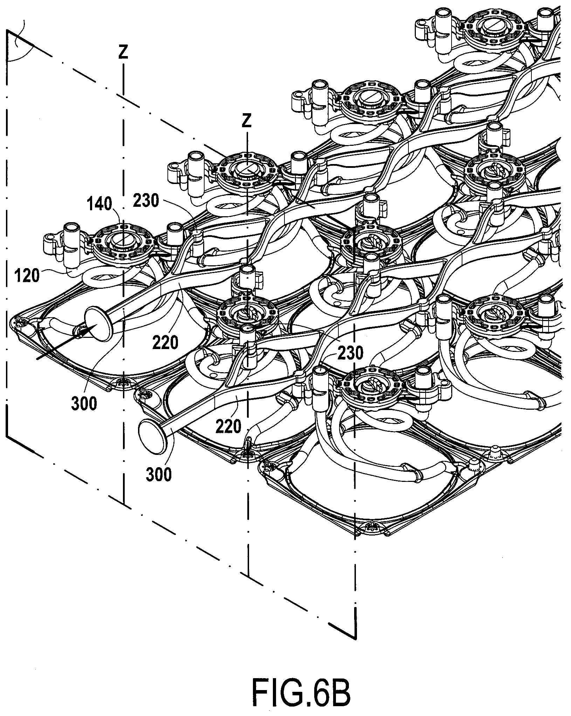

Un exemple de réalisation alternatif est illustré sur les figures 6A à 6C. Dans cet exemple alternatif, les ressorts 10 et le dispositif de réglage de raideur sont similaires à ceux du premier exemple, et les composants analogues reçoivent en conséquence les mêmes chiffres de référence sur les dessins. Les pièces rotatives 140 dans ce deuxième exemple peuvent être plus simples que celles du premier exemple, et comporter simplement des bras radiaux 146 portant les butées radiales 145 à leurs extrémités respectives mais, comme dans le premier exemple, chaque pièce rotative 140 peut tourner entre la position d'interférence dans laquelle ces butées radiales 145 restreignent l'écartement radial des manchons flexibles 130, et donc aussi des secondes extrémités 122 des tiges 120 emmanchées dans ces manchons flexibles 130, par rapport à l'axe de compression Z, et la position de non-interférence dans laquelle la pièce rotative 140 ne restreint plus ce mouvement d'écartement radial.

En outre, dans cet exemple de réalisation alternatif, les pivots 230 peuvent ne pas relier les pièces rotatives 140 directement à des pièces rotatives 140 adjacentes, mais plutôt à des organes de commande 300, pouvant être disposés entre les rangées de ressorts 10 et déplacés en ligne droite entre les positions d'interférence et de non-interférence du dispositif de réglage 400. Les éléments élastiques sous forme de lames flexibles 220 peuvent par ailleurs, dans cet exemple alternatif, être intégrés aux organes de commande 300, de telle manière que ces organes de commande 300 du dispositif de réglage traversent une position intermédiaire, entre les positions d'interférence et de non-interférence, dans laquelle les lames flexibles 220 soient contraintes élastiquement, contre leurs cambrures respectives, par le déplacement des pivots 230 perpendiculairement à celui des organes de commande 300 lors de leur rotation autour des axes de compression Z des ressorts 10 respectifs.

Toutefois, le principe de la flexion élastique dans la position intermédiaire pour assurer le retour vers l'une ou l'autre des positions d'interférence et de non-interférence peut même être appliqué sans des telles lames flexibles cambrées. En effet, les ressorts 10 peuvent présenter une élasticité en flexion perpendiculairement à leurs axes de compression Z, de manière à permettre un déplacement élastique latéral des pièces rotatives 140 dans leurs positions intermédiaires entre les premières et secondes positions. Dans ce cas, les ressorts 10 pourraient eux-mêmes constituer les éléments élastiques dont l'élasticité perpendiculairement à leurs axes de compression Z fournirait les forces de retour vers les positions d'interférence et de non-interférence de chaque côté de la position intermédiaire.

Quoique la présente invention ait été décrite en se référant à des exemples spécifiques, il est évident que des différentes modifications et changements peuvent être effectués sur ces exemples sans sortir de la portée générale de l'invention telle que définie par les revendications. En outre, des caractéristiques individuelles des différents exemples et modes de réalisation évoqués peuvent être combinées dans des modes de réalisation additionnels. Par conséquent, la description et les dessins doivent être considérés dans un sens illustratif plutôt que restrictif.

## Revendications

1. Dispositif de réglage de raideur, déplaçable entre une position d'interférence pour imposer une restriction sur la déformation d'un ressort (10) d'assise, de dossier ou de literie et une position de non-interférence pour libérer le ressort (10) de la restriction, en traversant une position intermédiaire entre les positions d'interférence et non-interférence, et comprenant un élément élastique soumis à une flexion élastique plus grande dans la position intermédiaire que dans les positions d'interférence et non-interférence.

2. Dispositif de réglage de raideur suivant la revendication 1, dans lequel l'élément élastique est une lame élastique (220).

3. Dispositif de réglage de raideur suivant la revendication 2, dans lequel la lame élastique (220), sans contrainte, est cambrée.

4. Dispositif de réglage de raideur suivant l'une quelconque des revendications précédentes, comprenant une pièce rotative (140) apte à tourner entre les positions d'interférence et non-interférence.

5. Dispositif de réglage de raideur suivant la revendication 4, dans lequel la pièce rotative (140) est apte à tourner autour d'un axe de compression (Z) du ressort (10) entre les positions d'interférence et non-interférence.

6. Dispositif de réglage de raideur suivant l'une quelconque des revendications 4 ou 5, dans lequel la pièce rotative (140) est moulée par injection.

7. Dispositif de réglage de raideur suivant l'une quelconque des revendications 4 à 6, comportant une pluralité de pièces rotatives (140) aptes à tourner entre les positions d'interférence et non-interférence, chaque pièce rotative (140) étant configurée pour imposer une restriction sur la déformation d'un ressort (10) respectif dans la position d'interférence, et libérer le ressort de literie (10) respectif de la restriction dans la position de non-interférence.

8. Dispositif de réglage de raideur suivant la revendication 7, comprenant un organe de commande (300) déplaçable entre les positions d'interférence et non-interférence, l'organe de commande (300) incluant une pluralité d'éléments élastiques soumis à une flexion élastique plus grande dans la position intermédiaire que dans les positions d'interférence et non-interférence, chaque élément élastique étant relié à une pièce rotative (140) respective, parmi la pluralité de pièces rotatives (140), par un pivot (230) correspondant.

9. Dispositif de réglage de raideur suivant la revendication 8, dans lequel l'organe de commande (300) est déplaçable en ligne droite entre les positions d'interférence et non-interférence.

10. Dispositif de réglage de raideur suivant l'une quelconque des revendications 8 ou 9, dans lequel l'organe de commande (300) est moulé par injection.

11. Dispositif de réglage de raideur suivant la revendication 7, dans lequel chaque pièce rotative (140) de la pluralité de pièces rotatives (140) comprend au moins un élément élastique soumis à une contrainte élastique plus grande dans la position intermédiaire que dans les positions d'interférence et non-interférence et relié par un pivot à une pièce rotative (140) adjacente parmi la pluralité de pièces rotatives (140).

12. Dispositif de réglage de raideur suivant l'une quelconque des revendications 1 à 7, dans lequel l'élément élastique est le ressort (10).

13. Ensemble (200) pour assisse, dossier ou couchage comprenant au moins un ressort (10) d'assise, de dossier ou de literie et un dispositif de réglage de raideur suivant l'une quelconque des revendications précédentes pour régler la raideur de l'au moins un ressort (10) par déplacement entre les positions d'interférence et non-interférence.

14. Ensemble (200) suivant la revendication 13 dans lequel l'au moins un ressort (10) est moulé par injection.

15. Procédé de réglage de raideur d'un ressort (10) d'assise, de dossier ou de literie avec un dispositif de réglage de raideur, comprenant au moins une étape dans laquelle le dispositif de réglage de raideur est déplacé entre une position d'interférence imposant une restriction sur la déformation du ressort (10) et une position de non-interférence libérant le ressort (10) de la restriction, en traversant une position intermédiaire dans laquelle un élément élastique du dispositif de réglage de raideur est soumis à une flexion élastique plus grande que dans les positions d'interférence et non-interférence.

## Patentansprüche

1. Vorrichtung zum Einstellen der Steifigkeit, die zwischen einer Interferenz-Position, um die Verformung einer Feder (10) einer Sitzfläche, einer Rückenlehne oder eines Bettsystems einzuschränken, und einer Nicht-Interferenz-Position, um die Feder (10) aus der Einschränkung zu lösen, unter Durchlaufen einer Zwischenposition zwischen der Interferenz- und der Nicht-Interferenz-Position beweglich ist und die ein elastisches Element umfasst, das in der Zwischenposition einer stärkeren elastischen Biegung ausgesetzt ist als in der Interferenz- und der Nicht-Interferenz-Position.

2. Vorrichtung zum Einstellen der Steifigkeit nach Anspruch 1, bei der das elastische Element ein elastisches Blatt (220) ist.

3. Vorrichtung zum Einstellen der Steifigkeit nach Anspruch 2, bei der das elastische Blatt (220) ohne Beanspruchung gewölbt ist.

4. Vorrichtung zum Einstellen der Steifigkeit nach einem der vorhergehenden Ansprüche, umfassend ein drehbares Teil (140), das geeignet ist, sich zwischen der Interferenz- und der Nicht-Interferenz-Position zu drehen.

5. Vorrichtung zum Einstellen der Steifigkeit nach Anspruch 4, bei der das drehbare Teil (140) geeignet ist, sich um eine Einfederungsachse (Z) der Feder (10) zwischen der Interferenz- und der Nicht-Interferenz-Position zu drehen.

6. Vorrichtung zum Einstellen der Steifigkeit nach einem der Ansprüche 4 oder 5, bei der das drehbare Teil (140) spritzgegossen ist.

7. Vorrichtung zum Einstellen der Steifigkeit nach einem der Ansprüche 4 bis 6, umfassend mehrere drehbare Teile (140), die geeignet sind, sich zwischen der Interferenz- und der Nicht-Interferenz-Position zu drehen, wobei jedes drehbare Teil (140) dazu ausgelegt ist, die Verformung einer jeweiligen Feder (10) in der Interferenz-Position einzuschränken und die jeweilige Bettsystemfeder (10) in der Nicht-Interferenz-Position aus der Einschränkung zu lösen.

8. Vorrichtung zum Einstellen der Steifigkeit nach Anspruch 7, umfassend ein Steuerorgan (300), das zwischen der Interferenz- und der Nicht-Interferenz-Position beweglich ist, wobei das Steuerorgan (300) eine Vielzahl von elastischen Elementen umfasst, die in der Zwischenposition einer größeren elastischen Biegung als in der Interferenz- und der Nicht-Interferenz-Position ausgesetzt sind, wobei jedes elastische Element durch einen entsprechenden Drehzapfen (230) mit einem jeweiligen drehbaren Teil (140) aus der Vielzahl von drehbaren Teilen (140) verbunden ist.

9. Vorrichtung zum Einstellen der Steifigkeit nach Anspruch 8, bei der das Steuerorgan (300) zwischen der Interferenz- und der Nicht-Interferenz-Position geradlinig bewegbar ist.

10. Vorrichtung zum Einstellen der Steifigkeit nach einem der Ansprüche 8 oder 9, bei der das Steuerorgan (300) spritzgegossen ist.

11. Vorrichtung zum Einstellen der Steifigkeit nach Anspruch 7, bei der jedes drehbare Teil (140) der Vielzahl von drehbaren Teilen (140) wenigstens ein elastisches Element umfasst, das in der Zwischenposition einer größeren elastischen Beanspruchung ausgesetzt ist als in der Interferenz- und der Nicht-Interferenz-Position und durch einen Drehzapfen mit einem benachbarten drehbaren Teil (140) aus der Vielzahl von drehbaren Teilen (140) verbunden ist.

12. Vorrichtung zum Einstellen der Steifigkeit nach einem der Ansprüche 1 bis 7, bei der das elastische Element die Feder (10) ist.

13. Anordnung (200) für eine Sitzfläche, Rückenlehne oder Liegefläche, umfassend wenigstens eine Sitzflächen-, Rückenlehnen- oder Bettsystemfeder (10) und eine Vorrichtung zum Einstellen der Steifigkeit nach einem der vorhergehenden Ansprüche, um die Steifigkeit der wenigstens einen Feder (10) durch Bewegen zwischen der Interferenz- und der Nicht-Interferenz-Position einzustellen.

14. Anordnung (200) nach Anspruch 13, bei der die wenigstens eine Feder (10) spritzgegossen ist.

15. Verfahren zum Einstellen der Steifigkeit einer Feder (10) einer Sitzfläche, einer Rückenlehne oder eines Bettsystems mit einer Vorrichtung zum Einstellen der Steifigkeit, umfassend wenigstens einen Schritt, bei dem die Vorrichtung zum Einstellen der Steifigkeit zwischen einer Interferenz-Position, welche die Verformung der Feder (10) einschränkt, und einer Nicht-Interferenz-Position, welche die Feder (10) aus der Einschränkung löst, unter Durchlaufen einer Zwischenposition beweglich ist, in der ein elastisches Element der Vorrichtung zum Einstellen der Steifigkeit einer stärkeren elastischen Biegung ausgesetzt ist als in der Interferenz- und der Nicht-Interferenz-Position.

## Claims

1. A stiffness adjustment device movable between an interference position for imposing a restriction on the deformation of a seat, back or bedding spring (10), and a non-interference position for releasing the spring (10) from the restriction, by passing through an intermediate position between the interference and the non-interference positions, and including a resilient element subjected in the intermediate position to resilient bending that is greater than in the interference and non-interference positions.

2. The stiffness adjustment device of claim 1, wherein the resilient element is a spring blade (220).

3. The stiffness adjustment device according to claim 2, wherein the spring blade (220), when not stressed, is curved.

4. The stiffness adjustment device according to any one of the preceding claims, including a rotary part (140) suitable for turning between the interference and non-interference positions.

5. The stiffness adjustment device according to claim 4, wherein the rotary part (140) is suitable for turning about a compression axis (Z) of the spring (10) between the interference and non-interference positions.

6. The stiffness adjustment device according to claim 4, wherein the rotary part (140) is injection molded.

7. The stiffness adjustment device according to any one of claims 4 to 6, including a plurality of rotary parts (140) suitable for turning between interference and non-interference positions, each rotary part (140) being configured to impose a restriction on the deformation of a corresponding spring (10) in the interference position, and to release the corresponding bedding spring (10) from the restriction in the non-interference position.

8. The stiffness adjustment device according to claim 7, including a control member (300) movable between the interference and non-interference positions, the control member (300) having a plurality of resilient elements subjected in the intermediate position to resilient bending that is greater than in the interference and non-interference positions, each resilient element being connected to a corresponding rotary part (140) from among the plurality of rotary parts (140) by a corresponding pivot (230).

9. The stiffness adjustment device according to claim 8, wherein the control member (300) is movable in a straight line between the interference and non-interference positions.

10. The stiffness adjustment device according to any one of claims 8 or 9, wherein the control member (300) is injection molded.

11. The stiffness adjustment device according to claim 7, wherein each rotary part (140) of the plurality of rotary parts (140) includes at least one resilient element subjected in the intermediate position to resilient stress that is greater than in the interference and non-interference positions, and that is connected via a pivot to an adjacent rotary part (140) among the plurality of rotary parts (140).

12. The stiffness adjustment device according to any one of claims 1 to 7, wherein the resilient element is the spring (10).

13. A seat, back, or bed assembly (200) including at least one seat, back, or bedding spring (10) and a stiffness adjustment device according to any preceding claim in order to adjust the stiffness of at least one spring (10) by moving between the interference and non-interference positions.

14. The assembly according to claim 13, wherein the at least one spring (10) is injection molded.

15. A method of adjusting stiffness of a seat, back, or bedding spring (10) with a stiffness adjustment device, the method comprising at least a step in which the stiffness adjustment device is moved between an interference position imposing a restriction on the deformation of the spring (10) and a non-interference position releasing the spring (10) from the restriction by passing through an intermediate position in which a resilient element of the stiffness adjustment device is subjected to resilient bending that is greater than in the interference and non-interference positions.
